# EUROPÄISCHE PATENTSCHRIFT

(11) **EP 3 330 528 B1**
(45) Veröffentlichungstag und Bekanntmachung des Hinweises auf die Patenterteilung: **22.07.2020**
(21) Anmeldenummer: 16202276.8
(22) Anmeldetag: 05.12.2016
(51) Int. Cl.: F03D 1/06, F03D 80/30

(54) **GURTBAUGRUPPE FÜR EIN WINDENERGIEANLAGENROTORBLATT**
BELT ASSEMBLY FOR A WIND TURBINE ROTOR BLADE
SYSTÈME DE COURROIES POUR UNE PALE DE ROTOR D'ÉOLIENNE

(43) Veröffentlichungstag der Anmeldung: 06.06.2018
(73) Patentinhaber: Nordex Energy GmbH, 22419 Hamburg (DE)
(72) Erfinder: Lipka, Thomas, 18055 Rostock (DE); Klein, Hendrik, 18147 Rostock (DE); Kremer, Jochen, 22299 Hamburg (DE)
(74) Vertreter: Hauck Patentanwaltspartnerschaft mbB

(56) Entgegenhaltungen:
- US-A1- 2014 301 859
- US-A1- 2014 341 747
- US-A1- 2016 221 272
- US-A1- 2016 333 850

## Beschreibung

Die Erfindung betrifft eine Gurtbaugruppe für ein Windenergieanlagenrotorblatt mit einem mit Kohlenstofffasern verstärkten Gurt, einem Blitzschutzleiter, der entlang des Gurtes verläuft, und einem Potentialausgleichselement, das den Gurt und den Blitzschutzleiter elektrisch leitend miteinander verbindet.

Die Verwendung von mit Kohlenstofffasern verstärkten Gurten in Windenergieanlagenrotorblättern stellt wegen der elektrischen Leitfähigkeit der Kohlenstofffasern besondere Anforderungen an den Blitzschutz. Insbesondere ist in der Regel ein Potentialausgleich zwischen derartigen Gurten und benachbart dazu verlaufenden, anderen elektrisch leitfähigen Strukturen wie etwa herkömmlichen Blitzschutzleitern erforderlich. Anderenfalls kann es zu Beschädigungen des Rotorblatts durch Überschläge zwischen den unterschiedlichen, elektrisch leitfähigen Strukturen kommen, die bei einem Blitzschlag insbesondere infolge elektromagnetischer Induktion auftreten können.

Vor diesem Hintergrund schlägt die Druckschrift EP 1 830 063 A1 vor, in einem Windenergieanlagenrotorblatt einen Kupferstreifen direkt auf ein Laminat aus Kohlenstofffasern aufzubringen.

Die Druckschrift EP 2 458 207 B1 beschreibt ein Windenergieanlagenrotorblatt mit einer Metallplatte, die in direkten Kontakt mit einem kohlenstofffaserhaltigen Laminat gebracht und über elektrische Leitungen mit einem Blitzschutzleiter verbunden wird.

Aus der Druckschrift EP 3 020 958 A1 ist ein Gurt für ein Windenergieanlagenrotorblatt bekannt geworden, dessen Laminat Schichten aus einem kohlenstofffaserhaltigen Material und Zwischenlagen aus einem anderen, elektrisch leitfähigen Material, insbesondere aus Metall, aufweist.

Aus der Druckschrift EP 2 930 010 A1 ist eine Gurtbaugruppe für ein Windenergieanlagenrotorblatt mit einem mit Kohlenstofffasern verstärkten Gurt, einem Blitzschutzleiter, der entlang dem Gurt verläuft, und einem Potentialausgleichselement, das den Gurt und den Blitzschutzleiter elektrisch leitend miteinander verbindet, bekannt geworden. Der Gurt besteht aus einem Laminat aus Kohlenstofffasern. Als Potentialausgleichselement wird ein Gewebe aus Kupferdrähten eingesetzt, das mit einem Blitzschutzleiter aus Kupfer verschweißt ist, und abschnittsweise auf dem Kohlenstofffaserlaminat aufliegt.

Ebenfalls bekannt ist die Verwendung pultrudierter Halbzeuge zur Herstellung von Gurten für Windenergieanlagenrotorblätter. Die pultrudierten Halbzeuge zeichnen sich aufgrund ihrer Herstellung im Pultrusionsverfahren durch exakt in Längsrichtung ausgerichtete Verstärkungsfasern, beispielsweise Kohlenstofffasern, genau definierte Querschnitte und einen besonders hohen Faservolumengehalt aus. Unter Verwendung pultrudierter Halbzeuge können daher Gurte hergestellt werden, die insbesondere hinsichtlich ihrer Festigkeit herkömmlichen, im Laminierverfahren (beispielsweise mittels Vakuuminfusion) hergestellten Gurten überlegen sind.

Aus der Druckschrift WO 2012/123667 A2 ist ein Gurt für ein Windenergieanlagenrotorblatt bekannt geworden, der aus mehreren Schichten pultrudierter Halbzeuge aufgebaut ist.

Aus der Druckschrift WO 2015/070876 A1 ist bekannt geworden, pultrudierte Halbzeuge mit Längsschlitzen zu versehen, um die Ausdehnung von Lufteinschlüssen bei einer Verbindung mehrerer in Schichten übereinander liegender Halbzeuge im Vakuuminfusionsverfahren zu begrenzen.

Aus der Druckschrift WO 2015/058775 A1 sind pultrudierte Halbzeuge für Windenergieanlagenrotorblätter bekannt geworden, die mit einer besonderen Oberflächenschicht versehen sind, um bei einer Verbindung mehrerer in Schichten übereinander liegender pultrudierter Halbzeuge im Vakuuminfusionsverfahren eine gleichmäßige Verteilung des eingebrachten Harzes zu erzielen.

Aus der Druckschrift WO 2015/067279 A1 ist bekannt geworden, pultrudierte Halbzeuge für Windenergieanlagenrotorblätter in einem speziellen Verfahren in Längsabschnitte mit einer bestimmten Schäftung zu unterteilen.

Aus der Druckschrift EP 1 844 526 B1 ist bekannt geworden, eine elektrische Heizeinrichtung aus Kohlenstofffasern zur Bestromung an elektrische Leitungen anzuschließen, indem abgeschrägte Enden der Kohlenstofffasern mit einem Leitkleber mit den elektrischen Leitern verklebt werden.

Die Druckschrift US 2014/0301859 A1 zeigt ein Windenergieanlagenrotorblatt mit einem Gurt, der mehrere Schichten pultrudierter Halbzeuge aufweist, die in einem U-förmigen Kanal angeordnet sind. Der U-förmige Kanal enthält ein Material, das als Blitzschutzleiter dient.

Davon ausgehend ist es die Aufgabe der Erfindung, eine Gurtbaugruppe für ein Windenergieanlagenrotorblatt zur Verfügung zu stellen, die optimale Festigkeitseigenschaften mit einem funktionierenden Blitzschutz verbindet.

Diese Aufgabe wird gelöst durch die Gurtbaugruppe mit den Merkmalen des Anspruchs 1. Vorteilhafte Ausgestaltungen sind in den sich anschließenden Unteransprüchen angegeben.

Die Gurtbaugruppe ist für ein Windenergieanlagenrotorblatt vorgesehen und hat
- einen mit Kohlenstofffasern verstärkten Gurt,
- einen Blitzschutzleiter, der entlang des Gurtes verläuft, und
- ein Potentialausgleichselement, das den Gurt und den Blitzschutzleiter elektrisch leitend miteinander verbindet, wobei
- der Gurt mehrere Schichten pultrudierter Halbzeuge aufweist und
- das Potentialausgleichselement eine Lage aus einem Kohlenstofffasermaterial aufweist, die an einer Stirnfläche eines blattwurzelseitigen Endes eines der pultrudierten Halbzeuge und an einer Stirnfläche eines blattspitzenseitigen Endes eines der pultrudierten Halbzeuge anliegt.

Der Gurt bildet ein Element der Tragstruktur des Windenergieanlagenrotorblatts. Insbesondere kann es sich um einen Hauptgurt handeln, der einen Großteil der im Betrieb des Windenergieanlagenrotorblatts auftretenden Zugbelastungen aufnimmt. Der Gurt weist eine Vielzahl pultrudierter Halbzeuge auf, in denen Kohlenstofffasern verarbeitet sind. Sie sind im Pultrusionsverfahren hergestellt, sodass eine die Verstärkungsfasern umgebende Kunststoffmatrix ausgehärtet ist, wenn die pultrudierten Halbzeuge in der Gurtbaugruppe verarbeitet werden. Dabei können mehrere pultrudierte Halbzeuge gemeinsam derart miteinander verbunden werden, dass sie den Gurt bilden. Vorzugsweise werden sie hierzu in eine gemeinsame Kunststoffmatrix eingebettet, beispielsweise in einem Vakuuminfusionsverfahren. Der Querschnitt des Gurts kann dabei über die Länge des Gurts variieren, wobei hierfür die Anzahl der nebeneinander und/oder übereinander angeordneten pultrudierten Halbzeuge variiert werden kann.

Der Blitzschutzleiter verläuft entlang des Gurts. Er kann zum Beispiel im Wesentlichen parallel zu dem Gurt verlaufen, in einem Abstand von dem Gurt, unmittelbar an dem Gurt oder eng benachbart davon. Der Blitzschutzleiter kann sich im Wesentlichen über die gesamte Länge des Gurts und gegebenenfalls auch darüber hinaus erstrecken. Er weist eine Stromtragfähigkeit auf, die zur Ableitung eines Blitzstroms ausreichend ist. Hierzu kann er beispielsweise aus Kupfer bestehen und einen wirksamen Querschnitt von 25 mm² oder mehr aufweisen, insbesondere von etwa 50 mm². Der Blitzschutzleiter kann ein massiver metallischer Leiter sein oder eine Vielzahl von Einzeldrähten aufweisen, beispielsweise in Form eines Flechtschlauchs, z.B. aus Kupfer.

Das Potentialausgleichselement verbindet den Gurt und den Blitzschutzleiter elektrisch leitend miteinander. Die elektrische Leitfähigkeit der Verbindung muss nicht perfekt sein, es ist ausreichend, wenn die zwischen Blitzschutzleiter und Gurt bei einem Blitzschlag auftretenden Potentialunterschiede so weit reduziert werden, dass Beschädigungen der Gurtbaugruppe oder benachbarter Elemente des Windenergieanlagenrotorblatts verhindert werden, insbesondere infolge von Überschlägen zwischen Blitzschutzleiter und Gurt.

Die Erfinder haben erkannt, dass die im Zusammenhang mit Laminaten aus Kohlenstofffasern verwendeten Blitzschutzeinrichtungen herkömmlicher Rotorblätter für Gurte aus pultrudierten Halbzeugen nur bedingt geeignet sind. Grund hierfür ist, dass die pultrudierten Halbzeuge zum Zeitpunkt ihrer elektrischen Verbindung mit einem Potentialausgleichselement bereits ausgehärtet sind und eine Oberfläche aufweisen, die überwiegend von einem Matrixmaterial gebildet ist. Die enthaltenen Kohlenstofffasern sind dadurch nicht oder nur stark eingeschränkt kontaktierbar.

Bei der Erfindung gelingt eine ausreichende elektrische Kontaktierung des Gurtes dadurch, dass als Potentialausgleichselement eine Lage aus einem Kohlenstofffasermaterial verwendet wird, die an einem blattwurzelseitigen Ende und an einem blattspitzenseitigen Ende eines pultrudierten Halbzeugs anliegt. Dabei kann es sich um dasselbe pultrudierte Halbzeug handeln, das sich über die gesamte Länge zwischen den beiden genannten Enden erstreckt, oder um unterschiedliche pultrudierte Halbzeuge innerhalb einer Schicht. Die Lage des Kohlenstofffasermaterials kann mehrere Längsabschnitte aufweisen und/oder von einer einzigen Materiallage gebildet sein, deren Kohlenstofffasern sich zwischen den beiden genannten Enden erstrecken. In jedem Fall ist die Lage so ausgebildet und angeordnet, dass sie einen elektrischen Kontakt mit den beiden Stirnflächen der in einer Schicht angeordneten, pultrudierten Halbzeuge aufweist und zugleich elektrisch mit dem Blitzschutzleiter verbunden ist. Die Lage des Kohlenstofffasermaterials kann besonders einfach in die Gurtbaugruppe integriert werden, da sie aufgrund ihrer Materialeigenschaften gut mit den übrigen Elementen der Gurtbaugruppe verbunden werden kann. Die Lage dient dabei nicht zur Übertragung eines Blitzstromes, sondern zur Übertragung eines Potentialausgleichsstromes.

In einer Ausgestaltung erstreckt sich die Lage über die gesamte Länge des Gurts. Das Potentialausgleichselement erfasst damit also den Gurt über seine gesamte Länge. Insbesondere kann dies dadurch erreicht werden, dass die blattspitzen- und blattwurzelseitigen Stirnflächen der längsten pultrudierten Halbzeuge, die sich über die gesamte Länge des Gurts erstrecken, an der Lage anliegen. Die Lage kann dabei zwischen zwei der Schichten pultrudierter Halbzeuge angeordnet sein.

In einer Ausgestaltung liegt die Lage flächig an dem Gurt und/oder an dem Blitzableiter an, insbesondere jeweils über die gesamte Länge des Gurts. Dadurch bleibt die elektrische Kontaktierung zwischen Potentialausgleichselement und Gurt nicht auf die beiden Stirnflächen beschränkt, sondern schließt zusätzlich einen großflächigen Kontakt über die Längserstreckung des Gurts ein. Obwohl die elektrisch leitfähigen Kohlenstofffasern des Gurts aufgrund ihrer Verarbeitung in pultrudierten Halbzeugen nur eingeschränkt zugänglich sind, bewirkt der großflächige Kontakt eine Verbesserung des Potentialausgleichs.

In einer Ausgestaltung ist eine der Stirnflächen schräg zur Längsrichtung des Gurts angeordnet, wobei ein Normalenvektor auf die Stirnfläche im Wesentlichen orthogonal zu einer Querrichtung des Gurts ausgerichtet ist und das Verhältnis aus einer Dicke des pultrudierten Halbzeugs, an dem die Stirnfläche ausgebildet ist, und der Erstreckung der Stirnfläche in Längsrichtung des Gurts im Bereich von 1:5 bis 1:50 liegt. Insbesondere kann das Verhältnis im Bereich von 1:10 bis 1:30 liegen, zum Beispiel bei etwa 1:20. Es versteht sich, dass auch beide bzw. sämtliche Stirnflächen, an denen die Lage anliegt, entsprechend schräg ausgebildet sein können. Durch die schräge Ausbildung der Stirnfläche wird die Kontaktfläche zwischen pultrudiertem Halbzeug und Potentialausgleichselement vergrößert, ohne den Gurt strukturell zu schwächen. Außerdem ist an den Kontaktflächen eine Kontaktierung der offenen Rovings möglich, wodurch der Übergangswiderstand zwischen der Kohlenstofffaserlage und den pultrudierten Halbzeugen verringert werden kann.

In einer Ausgestaltung weist das Potentialausgleichselement eine weitere Lage aus einem Kohlenstofffasermaterial auf, die an der Lage und/oder an dem Blitzschutzleiter und an mindestens einer Stirnfläche eines weiteren pultrudierten Halbzeugs des Gurts anliegt. Dadurch wird die elektrische Kontaktierung der den Gurt bildenden pultrudierten Halbzeuge weiter verbessert.

In einer Ausgestaltung weist der Gurt eine Anzahl von übereinander angeordneten Schichten pultrudierter Halbzeuge auf, wobei jede der Schichten eine blattwurzelseitige Stirnfläche und eine blattspitzenseitige Stirnfläche aufweist und die weitere Lage mindestens an der Hälfte der blattwurzelseitigen Stirnflächen und mindestens an der Hälfte der blattspitzenseitigen Stirnflächen anliegt. Auch durch diese Maßnahme wird der Potentialausgleich weiter verbessert.

In einer Ausgestaltung liegt die weitere Lage zwischen zwei benachbarten Stirnflächen, an denen sie anliegt, flächig an einem pultrudierten Halbzeug an. Dadurch kontaktiert auch die weitere Lage die angrenzenden pultrudierten Halbzeuge nicht nur im Bereich der Stirnflächen, sondern zusätzlich großflächig an einer oberen Fläche.

In einer Ausgestaltung ist die weitere Lage in zwei Längsabschnitte unterteilt, von denen einer an mindestens der Hälfte der blattwurzelseitigen Stirnflächen und der andere an mindestens der Hälfte der blattspitzenseitigen Stirnflächen anliegt. Die weitere Lage kann somit von zwei Längsabschnitten gebildet sein, zwischen denen eine Lücke verbleibt. Jeder der Längsabschnitte kann zusätzlich an der Lage anliegen, sodass insgesamt ein guter Potentialausgleich bei relativ geringem Materialeinsatz erzielt wird.

In einer Ausgestaltung liegen die Stirnflächen einer obersten der Schichten nicht an dem Potentialausgleichselement an. Mit der obersten Schicht ist diejenige Schicht gemeint, die beim Einlegen der Gurtbaugruppe in eine Herstellungsform für eine Rotorblatthalbschale am weitesten oben angeordnet ist, sich also im größten Abstand von einer aerodynamischen Fläche der betreffenden Halbschale befindet. Diese oberste Schicht weist in der Regel die geringste Länge auf und erstreckt sich im Wesentlichen in einem mittleren Längsabschnitt des Rotorblatts. Eine elektrische Kontaktierung dieser Stirnflächen ist für einen ausreichenden Potentialausgleich unter Umständen verzichtbar, sodass eine besonders kompakte Ausführung des Potentialausgleichselements möglich ist.

In einer Ausgestaltung erstreckt sich die Lage und/oder die weitere Lage über die gesamte Breite des Gurts. Dadurch wird ein besonders großflächiger Kontakt erzielt, der insbesondere auch mehrere, nebeneinander angeordnete pultrudierte Halbzeuge erfasst.

In einer Ausgestaltung weist die Lage und/oder die weitere Lage ein bidirektionales Gewebe aus Kohlenstofffasern auf. Dadurch wird eine relativ hohe elektrische Leitfähigkeit in einer Querrichtung des Gurts, also eine besonders gute Verbindung zwischen einem benachbart angeordneten Blitzschutzleiter und dem Gurt, erreicht.

In einer Ausgestaltung weist die Lage und/oder die weitere Lage unidirektional angeordnete Kohlenstofffasern auf, die in Längsrichtung des Gurts angeordnet sind. In diesem Fall ist die elektrische Leitfähigkeit in Querrichtung zwar geringer, was durch eine ausreichende Dicke der Lage bzw. der weiteren Lage kompensiert werden kann. Der Vorteil besteht darin, dass die betreffende Lage einen Beitrag zur Festigkeit des Gurts leisten kann.

In einer Ausgestaltung ist die Lage zwischen zwei Schichten aus pultrudierten Halbzeugen angeordnet und/oder die weitere Lage ist eine Abdecklage, die auf einer Oberseite des Gurts angeordnet ist. Dadurch wird einerseits ein guter elektrischer Kontakt zwischen der jeweiligen Lage und den Elementen des Gurts erzielt. Gleichzeitig wird die exakte Anordnung der pultrudierten Halbzeuge in einer Herstellungsform nicht wesentlich erschwert.

In einer Ausgestaltung sind die pultrudierten Halbzeuge, der Blitzschutzleiter und das Potentialausgleichselement in eine gemeinsame Kunststoffmatrix eingebettet und als vorgefertigte Baugruppe zur Integration in ein Windenergieanlagenrotorblatt nach dem Aushärten der Kunststoffmatrix ausgebildet. Das Einbetten kann insbesondere in einem Vakuuminfusionsverfahren erfolgen. Hierfür kann die Gurtbaugruppe in einer speziellen Herstellungsform vorgefertigt werden. Die Integration in ein Windenergieanlagenrotorblatt vereinfacht sich dadurch. Alternativ können die Elemente der Gurtbaugruppe gemeinsam mit weiteren Komponenten des Windenergieanlagenrotorblatts miteinander verbunden werden, etwa in einer Herstellungsform für eine Rotorblatthalbschale, in die die Elemente der Gurtbaugruppe und weitere Materialien für die übrigen Elemente der Halbschale eingelegt werden.

Die Erfindung richtet sich ebenfalls auf ein Windenergieanlagenrotorblatt mit einer Gurtbaugruppe in einer der vorstehend erläuterten Ausgestaltungen. Das Windenergieanlagenrotorblatt kann insbesondere eine druckseitige und eine saugseitige Rotorblatthalbschale aufweisen, in denen jeweils eine Gurtbaugruppe verarbeitet sein kann, und einen oder mehrere Stege, die zwischen den Gurtbaugruppen angeordnet sind. Der Blitzschutzleiter der Gurtbaugruppe bzw. die Blitzschutzleiter der beiden Gurtbaugruppen können jeweils mit einem oder mehreren Blitzrezeptoren des Windenergieanlagenrotorblatts verbunden sein.

Nachfolgend wird die Erfindung anhand von in Figuren dargestellten Ausführungsbeispielen näher erläutert. Es zeigen:
- Fig. 1: eine erfindungsgemäße Gurtbaugruppe in schematischer Darstellung im Längsschnitt;
- Fig. 2: eine andere erfindungsgemäße Gurtbaugruppe, ebenfalls in schematischer Darstellung im Längsschnitt;
- Fig. 3a bis 3i: Elemente einer anderen, erfindungsgemäßen Gurtbaugruppe in Draufsichten beim Einlegen in eine Herstellungsform zu aufeinanderfolgenden Zeitpunkten;
- Fig. 4: die Gurtbaugruppe aus Fig. 2 in einer schematischen Ansicht im Querschnitt.

Für alle Ausführungsbeispiele werden für sich entsprechende Elemente dieselben Bezugszeichen verwendet.

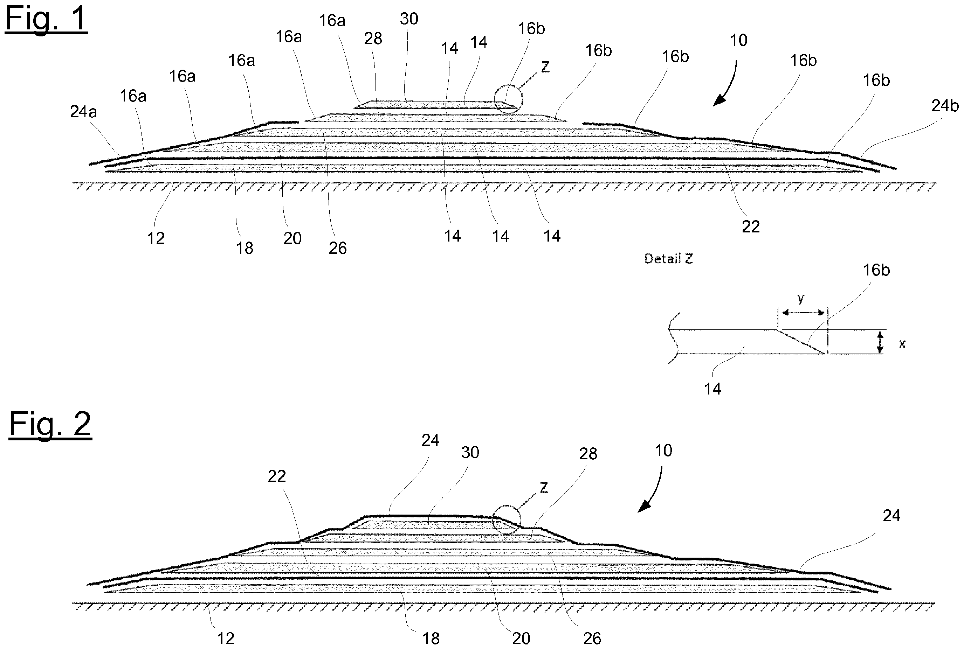

Die schematisch dargestellte Gurtbaugruppe 10 aus Fig. 1 ist auf einer Herstellungsform 12 angeordnet, auf der sämtliche Elemente der Gurtbaugruppe 10 in einem Vakuuminfusionsverfahren miteinander verbunden werden. In der Schnittebene der Figur 1 erkennt man beispielhaft fünf Schichten pultrudierter Halbzeuge 14, wobei jede Schicht aus mehreren, nebeneinander angeordneten Halbzeugen besteht. Die Halbzeuge erstrecken sich jeweils von einem in der Figur 1 links dargestellten, blattwurzelseitigen Ende bis zu einem in der Figur 1 rechts dargestellten, blattspitzenseitigen Ende. An den genannten Enden weisen alle Schichten jeweils eine schrägstehende Stirnfläche 16 auf, deren Normalenvektor im Wesentlichen senkrecht auf eine Querrichtung des Gurts, die sich in die Zeichenebene hinein erstreckt, angeordnet ist.

In dem hervorgehobenen Detail Z ist beispielhaft für eine der Stirnflächen 16 dargestellt, wie die Dicke x des pultrudierten Halbzeugs 14 ein Verhältnis zu der Erstreckung y der Stirnfläche 16 in Längsrichtung des Gurts bildet. Dieses Verhältnis beträgt im gezeigten Ausführungsbeispiel etwa 1:20, ist also wesentlich kleiner als in der nicht maßstabsgerechten Zeichnung dargestellt.

Zwischen der untersten Schicht 18 und der zweiten Schicht 20 der pultrudierten Halbzeuge 14 ist eine Lage 22 aus einem Kohlenstofffasermaterial angeordnet, die nachfolgend auch als erste Lage 22 bezeichnet wird. Sie erstreckt sich über die gesamte Länge des Gurts und liegt flächig an den pultrudierten Halbzeugen 14 der untersten Schicht 18 und den pultrudierten Halbzeugen 14 der zweiten Schicht 20 an. Außerdem liegt die erste Lage 22 flächig an den blattwurzelseitigen Stirnflächen 16a und blattspitzenseitigen Stirnflächen 16b der pultrudierten Halbzeuge 14 der untersten Schicht 18 an. Darüber hinaus ist die erste Lage 22 mit einem in der Figur 1 nicht dargestellten Blitzschutzleiter verbunden. Hierzu wird auf die weiteren Figuren verwiesen.

Die erste Lage 22 bildet einen Teil eines Potentialausgleichselements der Gurtbaugruppe 10. Einen anderen Bestandteil dieses Potentialausgleichselements bildet eine weitere Lage 24 aus einem Kohlenstofffasermaterial, die nachfolgend auch als zweite Lage 24 bezeichnet wird. Sie ist in einen blattwurzelseitigen Längsabschnitt 24a und in einen blattspitzenseitigen Längsabschnitt 24b unterteilt, zwischen denen sich eine Lücke befindet.

Der blattwurzelseitige Längsabschnitt 24a der zweiten Lage 24 liegt an den abgeschrägten blattwurzelseitigen Stirnflächen 16a der pultrudierten Halbzeuge 14 der zweiten Schicht 20 und der dritten Schicht 26 sowie im Bereich der blattwurzelseitigen Stirnfläche 16a der pultrudierten Halbzeuge 14 der untersten Schicht 18 an der ersten Lage 22 des Potentialausgleichselements an. Außerdem liegt der blattwurzelseitige Längsabschnitt 24a der zweiten Lage 24 flächig an einem Abschnitt der Oberseite des pultrudierten Halbzeugs 14 der dritten Schicht 26 an.

Der blattspitzenseitige Längsabschnitt 24b der zweiten Lage 24 liegt an den blattspitzenseitigen Stirnflächen 16b der pultrudierten Halbzeuge 14 der zweiten Schicht 20 und der dritten Schicht 26 an, sowie im Bereich der blattspitzenseitigen Stirnfläche 16b der pultrudierten Halbzeuge 14 der ersten Schicht 18 an der ersten Lage 22. Außerdem liegt dieser Längsabschnitt 24b der zweiten Lage 24 zwischen den Stirnflächen 16b der pultrudierten Halbzeuge 14 der zweiten Schicht 20 und der dritten Schicht 26 flächig an der Oberseite der pultrudierten Halbzeuge 14 der zweiten Schicht 20 an. Die beiden Längsabschnitte 24a, 24b der zweiten Lage 24 sind ebenfalls mit einem in der Figur 1 nicht dargestellten Blitzableiter verbunden, wie später noch erläutert wird.

Die pultrudierten Halbzeuge 14 einer vierten Schicht 28 und einer obersten Schicht 30 werden von den beiden Längsabschnitten 24a und 24b der zweiten Schicht 24 nicht abgedeckt und stehen somit nicht unmittelbar in Kontakt mit dem Potentialausgleichselement.

Das Ausführungsbeispiel der Figur 2 gleicht hinsichtlich der Schichten 18, 20, 26, 28, 30 und der ersten Lage 22 des Potentialausgleichselements dem Ausführungsbeispiel der Figur 1. Unterschiede bestehen in der Ausgestaltung der zweiten Lage 24 des Potentialausgleichselements. Diese ist im Ausführungsbeispiel der Figur 2 eine sich ebenfalls über die gesamte Länge des Gurts erstreckende Abdecklage, die an allen blattwurzelseitigen und blattspitzenseitigen Stirnflächen 16a, 16b der zweiten Schicht 20, der dritten Schicht 26, der vierten Schicht 28 und der obersten Schicht 30 anliegt sowie zusätzlich an den zwischen diesen Stirnflächen 16a, 16b angeordneten Oberseiten der jeweiligen pultrudierten Halbzeuge 14. Außerdem liegt die zweite Lage 24 im Bereich der blattwurzelseitigen und blattspitzenseitigen Stirnflächen 16a, 16b der untersten Schicht 18 flächig an den dort befindlichen Abschnitten der ersten Lage 22 an. Wie im Ausführungsbeispiel der Figur 1 auch, sind die erste Lage 22 und die zweite Lage 24 des Potentialausgleichselement elektrisch mit einem in der Figur 2 nicht dargestellten Blitzschutzleiter verbunden.

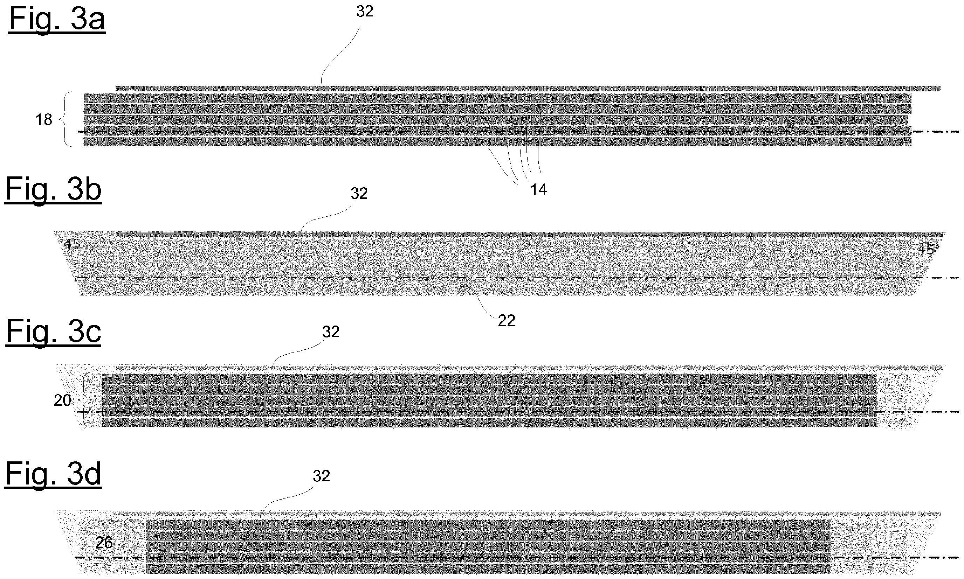

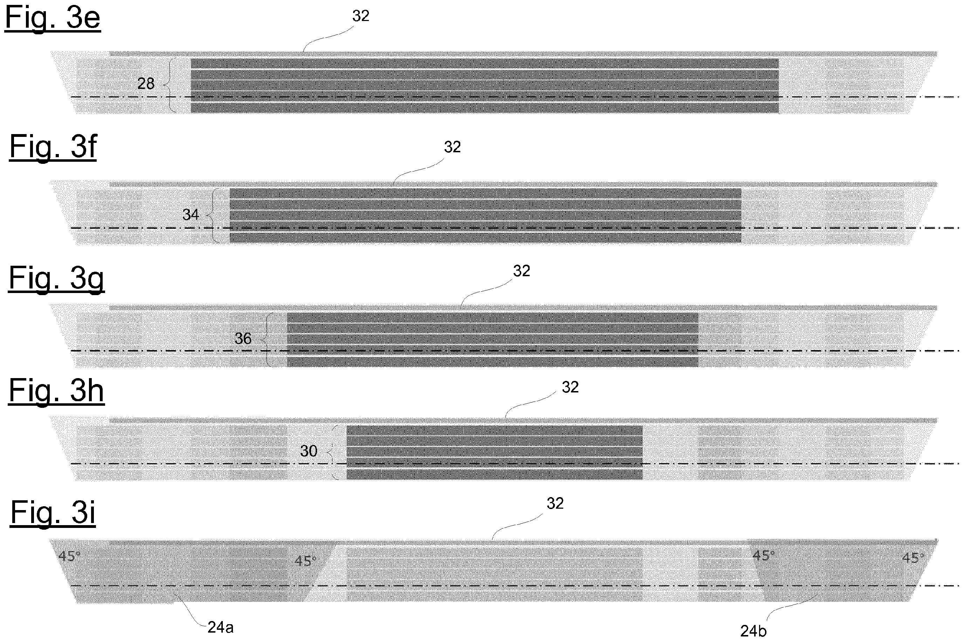

Der Aufbau eines der Figur 1 ähnelnden Ausführungsbeispiels einer Gurtbaugruppe wird anhand der Figuren 3a bis 3i näher erläutert, die jeweils Draufsichten zeigen. Ein blattwurzelseitiges Ende der gezeigten Elemente ist in allen Teilen der Figur 3 stets links dargestellt, ein blattspitzenseitiges Ende rechts.

Man erkennt in der Figur 3a eine unterste Schicht 18, die aus fünf nebeneinander angeordneten, pultrudierten Halbzeugen 14 besteht. Benachbart zu der untersten Schicht 18 verläuft ein Blitzschutzleiter 32, der sich nicht ganz bis an die Blattwurzel heran erstreckt, am blattspitzenseitigen Ende der pultrudierten Halbzeuge 14 der untersten Schicht 18 jedoch etwas in Richtung zur Blattspitze hin übersteht. Der Blitzschutzleiter 32 besteht im Beispiel aus Kupfer.

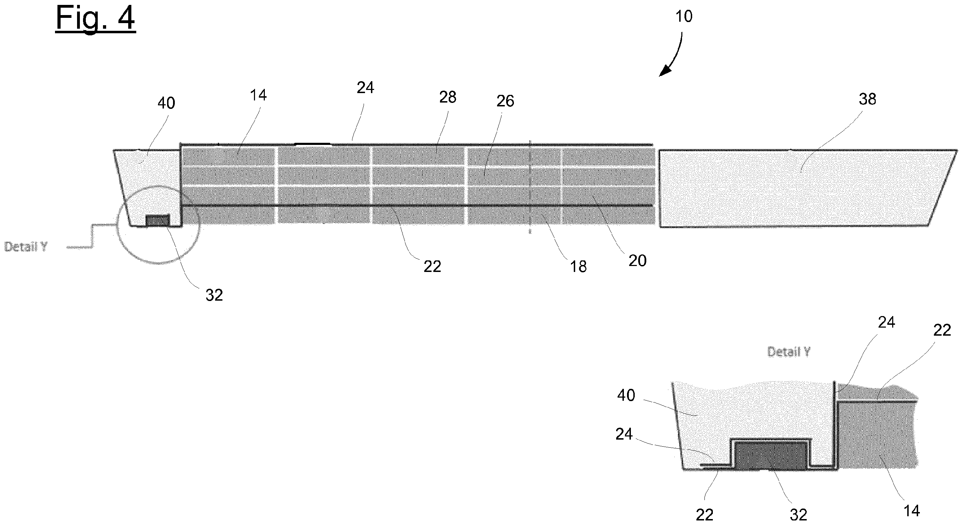

Figur 3b zeigt, dass in einem auf die Figur 3a folgenden Schritt eine erste Lage 22 eines Kohlenstofffasermaterials, im Beispiel bestehend aus einem biaxialen Gewebe, auf die Anordnung aus der Figur 3a aufgelegt wird. Diese erste Lage 22 erstreckt sich über die gesamte Länge der untersten Schicht 18 und steht am blattwurzelseitigen und am blattspitzenseitigen Ende, wo die erste Lage 22 in einem Winkel von etwa 45°, bevorzugt in einem Winkelbereich zwischen 40° und 60°, abgeschrägt ist, über die unterste Schicht 18 über. Die erste Lage 22 erstreckt sich über die gesamte Breite des Gurts bzw. über die gesamte Breite der aus den fünf nebeneinander angeordneten pultrudierten Halbzeugen 14 bestehenden untersten Schicht 18. Weiterhin erstreckt sich die erste Lage 22 an einer Seite über diese Breite hinaus und über den Blitzschutzleiter 32 hinweg, wo sie ebenfalls etwas übersteht. Einzelheiten hierzu werden später anhand der Figur 4 erläutert.

Fig. 3c zeigt, wie auf die Anordnung aus Fig. 3b eine zweite Schicht 20 aus ebenfalls fünf pultrudierten Halbzeugen 14 aufgelegt wird. Diese pultrudierten Halbzeuge 14 sind etwas kürzer als die pultrudierten Halbzeuge 14 der ersten Schicht 18.

Fig. 3d zeigt eine vierte Schicht 28, ebenfalls bestehend aus fünf nebeneinander angeordneten pultrudierten Halbzeugen 14, die auf die Anordnung aus der Figur 3c aufgelegt ist und nochmals etwas kürzer ausfällt als die zweite Schicht 20.

Die Figuren 3e bis 3h zeigen weitere Arbeitsschritte, in denen jeweils eine weitere Schicht, nämlich eine vierte Schicht 28, eine fünfte Schicht 34, eine sechste Schicht 36 und eine oberste Schicht 30, jeweils bestehend aus fünf nebeneinander angeordneten, pultrudierten Halbzeugen 14 mit von Schicht zu Schicht abnehmender Länge, aufgelegt wird.

Schließlich zeigt Figur 3i, wie die zweite Lage 24 eines Kohlenstofffasermaterials, die in zwei Längsabschnitte 24a, 24b unterteilt ist, aufgelegt wird. Die Längsabschnitte der zweiten Lage 24 sind so bemessen, dass sie jeweils einen Teil der Stirnflächen 16a, 16b der pultrudierten Halbzeuge 14 einiger der unteren Schichten erfassen. Andere Stirnflächen 16a, 16b, insbesondere die der pultrudierten Halbzeuge 14 der obersten Schicht 30, werden von der zweiten Lage 24 nicht erfasst.

Figur 4 zeigt einen Querschnitt durch eine Gurtbaugruppe 10 an einer Längsposition, an der der Gurt aus vier Schichten 18, 20, 26, 28 aus jeweils fünf nebeneinander angeordneten, pultrudierten Halbzeugen 14 aufgebaut ist. Im Querschnitt ist jedes der pultrudierten Halbzeuge 14 rechteckig und weist Abmessungen im Bereich von 1 mm bis 10 mm (Dicke) mal 40 mm bis 200 mm (Breite) auf.

In der Figur 4 an der rechten Seite, die zur Profilnasenkante weist, ist ein im Querschnitt viereckiger Einleger 38 aus einem Kernmaterial dargestellt. Ein weiterer Einleger 40 aus einem Kernmaterial befindet sich an der anderen Seite des Gurtes, die der Profilendkante zugewandt ist. Dieser Einleger 40 ist im Querschnitt ebenfalls viereckig, weist an seiner Unterseite, die einer Herstellungsform für die Gurtbaugruppe bzw. Rotorblatthalbschale zugewandt ist, jedoch eine im Querschnitt rechteckige Nut auf, in der der Blitzschutzleiter 32 angeordnet ist.

Zwischen der untersten Schicht 18 und der zweiten Schicht 20 der pultrudierten Halbzeuge 14 ist die erste Lage 22 des Kohlenstofffasermaterials dargestellt. Sie endet in der Figur 4 rechts, zur Profilnasenkante hin, bündig mit den dort endenden, pultrudierten Halbzeugen 14 bzw. kurz davor, sodass sie nicht zum Einleger 38 hin übersteht. Die erste Lage 22 erstreckt sich über die gesamte Breite der ersten Schicht 18 und in der Figur 4 nach links, zur Profilendkante hin, darüber hinaus. Wie die unten rechts dargestellte Ausschnittsvergrößerung des Details Y zeigt, verläuft die erste Lage 22 dort zunächst zwischen dem gezeigten, endkantenseitigen pultrudierten Halbzeug 14 der untersten Schicht 18 und dem Einleger 40 nach unten und kleidet dann im weiteren Verlauf zur Profilendkante hin die im Einleger 40 ausgebildete Nut aus, sodass sie an drei Seiten des Blitzschutzleiters 32 flächig anliegt. Im weiteren Verlauf steht die erste Lage 22 etwas über die profilendkantenseitige Fläche des Blitzschutzleiters 32 über.

Die zweite Lage 24 deckt die vierte Schicht 28 der pultrudierten Halbzeuge 14 über die gesamte Breite des Gurts ab, wobei sie zur Profilnasenkante hin ebenfalls nicht übersteht. Weiter in Richtung zur Profilendkante hin verläuft sie zunächst zwischen den endkantenseitigen, pultrudierten Halbzeugen 14 der vierten Schicht 28, der dritten Schicht 26 und der zweiten Schicht 28 einerseits und dem Einleger 40 andererseits nach unten, dann weiter zwischen dem Einleger 40 und der ersten Lage 22. Sie liegt somit im Bereich der Nut an der ersten Lage 22 an, sodass über die erste Lage 22 ein elektrischer Kontakt zum Blitzschutzleiter 32 hergestellt wird.

Die gesamte Anordnung der Figur 4 kann, insbesondere im Vakuuminfusionsverfahren in einer hierfür vorgesehenen Herstellungsform, in eine Kunststoffmatrix eingebettet werden, sodass sich eine vorgefertigte Gurtbaugruppe 10 ergibt, die später in ein Windenergieanlagenrotorblatt integriert werden kann.

### Liste der verwendeten Bezugszeichen

- 10: Gurtbaugruppe
- 12: Herstellungsform
- 14: pultrudiertes Halbzeug
- 16: Stirnfläche
- 16a: blattwurzelseitige Stirnfläche
- 16b: blattspitzenseitige Stirnfläche
- 18: unterste Schicht
- 20: zweite Schicht
- 22: erste Lage
- 24: zweite Lage
- 24a: blattwurzelseitiger Längsabschnitt der zweiten Lage
- 24b: blattspitzenseitiger Längsabschnitt der zweiten Lage
- 26: dritte Schicht
- 28: vierte Schicht
- 30: oberste Schicht
- 32: Blitzschutzleiter
- 34: fünfte Schicht
- 36: sechste Schicht
- 38: profilnasenkantenseitiger Einleger
- 40: profilendkantenseitiger Einleger

## Patentansprüche

1. Gurtbaugruppe (10) für ein Windenergieanlagenrotorblatt mit
• einem mit Kohlenstofffasern verstärkten Gurt,
• einem Blitzschutzleiter (32), der entlang des Gurtes verläuft, und
• einem Potentialausgleichselement, das den Gurt und den Blitzschutzleiter (32) elektrisch leitend miteinander verbindet, wobei
• der Gurt mehrere Schichten pultrudierter Halbzeuge (14) aufweist und
• das Potentialausgleichselement eine Lage (22, 24) aus einem Kohlenstofffasermaterial aufweist, die an einer Stirnfläche (16a) eines blattwurzelseitigen Endes eines der pultrudierten Halbzeuge (14) und an einer Stirnfläche (16b) eines blattspitzenseitigen Endes eines der pultrudierten Halbzeuge (14) anliegt.

2. Gurtbaugruppe (10) für ein Windenergieanlagenrotorblatt nach Anspruch 1, **dadurch gekennzeichnet, dass** sich die Lage (22, 24) über die gesamte Länge des Gurts erstreckt.

3. Gurtbaugruppe (10) für ein Windenergieanlagenrotorblatt nach Anspruch 1 oder 2, **dadurch gekennzeichnet, dass** die Lage (22) zwischen zwei der Schichten pultrudierter Halbzeuge (14) angeordnet ist.

4. Gurtbaugruppe (10) für ein Windenergieanlagenrotorblatt nach einem der Ansprüche 1 bis 3, **dadurch gekennzeichnet, dass** die Lage (22, 24) flächig an dem Gurt und/oder an dem Blitzschutzleiter (32) anliegt.

5. Gurtbaugruppe (10) für ein Windenergieanlagenrotorblatt nach einem der Ansprüche 1 bis 4, **dadurch gekennzeichnet, dass** eine der Stirnflächen (16a, 16b) schräg zur Längsrichtung des Gurts angeordnet ist, wobei ein Normalenvektor auf die Stirnfläche (16a, 16b) im Wesentlichen orthogonal zu einer Querrichtung des Gurts ausgerichtet ist und das Verhältnis aus einer Dicke des pultrudierten Halbzeugs (14), an dem die Stirnfläche (16a, 16b) ausgebildet ist, und der Erstreckung der Stirnfläche (16a, 16b) in Längsrichtung des Gurts im Bereich von 1:5 bis 1:50 liegt.

6. Gurtbaugruppe (10) für ein Windenergieanlagenrotorblatt nach einem der Ansprüche 1 bis 5, **dadurch gekennzeichnet, dass** das Potentialausgleichselement eine weitere Lage (24) aus einem Kohlenstofffasermaterial aufweist, die an der Lage (22) und/oder an dem Blitzschutzleiter (32) und an mindestens einer Stirnfläche (16a, 16b) eines weiteren pultrudierten Halbzeugs (14) des Gurts anliegt.

7. Gurtbaugruppe (10) für ein Windenergieanlagenrotorblatt nach einem der Ansprüche 1 bis 6, **dadurch gekennzeichnet, dass** der Gurt eine Anzahl von übereinander angeordneten Schichten (18, 20, 26, 28, 30, 34, 36) pultrudierter Halbzeuge (14) aufweist, wobei jede der Schichten (18, 20, 26, 28, 30, 34, 36) eine blattwurzelseitige Stirnfläche (16a) und eine blattspitzenseitige Stirnfläche (16b) aufweist und die weitere Lage (24) mindestens an der Hälfte der blattwurzelseitigen Stirnflächen (16a) und mindestens an der Hälfte der blattspitzenseitigen Stirnflächen (16b) anliegt.

8. Gurtbaugruppe (10) für ein Windenergieanlagenrotorblatt nach Anspruch 7, **dadurch gekennzeichnet, dass** die weitere Lage (24) zwischen zwei benachbarten Stirnflächen (16), an denen sie anliegt, flächig an einem pultrudierten Halbzeug (14) anliegt.

9. Gurtbaugruppe (10) für ein Windenergieanlagenrotorblatt nach Anspruch 7 oder 8, **dadurch gekennzeichnet, dass** die weitere Lage (24) in zwei Längsabschnitte (24a, 24b) unterteilt ist, von denen einer an mindestens der Hälfte der blattwurzelseitigen Stirnflächen (16a) und der andere an mindestens der Hälfte der blattspitzenseitigen Stirnflächen (16b) anliegt.

10. Gurtbaugruppe (10) für ein Windenergieanlagenrotorblatt nach einem der Ansprüche 1 bis 9, **dadurch gekennzeichnet, dass** die Stirnflächen (16) einer obersten Schicht (30) nicht an dem Potentialausgleichselement anliegen.

11. Gurtbaugruppe (10) für ein Windenergieanlagenrotorblatt nach einem der Ansprüche 1 bis 10, **dadurch gekennzeichnet, dass** sich die Lage (22) und/oder die weitere Lage (24) über die gesamte Breite des Gurts erstreckt.

12. Gurtbaugruppe (10) für ein Windenergieanlagenrotorblatt nach einem der Ansprüche 1 bis 11, **dadurch gekennzeichnet, dass** die Lage (22) und/oder die weitere Lage (24) ein bidirektionales Gewebe aus Kohlenstofffasern aufweist.

13. Gurtbaugruppe (10) für ein Windenergieanlagenrotorblatt nach einem der Ansprüche 1 bis 12, **dadurch gekennzeichnet, dass** die Lage (22) und/oder die weitere Lage (24) unidirektional angeordnete Fasern aufweist, die in Längsrichtung des Gurts angeordnet sind.

14. Gurtbaugruppe (10) für ein Windenergieanlagenrotorblatt nach einem der Ansprüche 1 bis 13, **dadurch gekennzeichnet, dass** die weitere Lage (24) eine Abdecklage ist, die auf einer Oberseite des Gurts angeordnet ist.

15. Gurtbaugruppe (10) für ein Windenergieanlagenrotorblatt nach einem der Ansprüche 1 bis 14, **dadurch gekennzeichnet, dass** die pultrudierten Halbzeuge (14), der Blitzschutzleiter (32) und das Potentialausgleichselement in eine gemeinsame Kunststoffmatrix eingebettet und als vorgefertigte Baugruppe zur Integration in ein Windenergieanlagenrotorblatt nach dem Aushärten der Kunststoffmatrix ausgebildet sind.

16. Windenergieanlagenrotorblatt mit einer Gurtbaugruppe (10) nach einem der Ansprüche 1 bis 15.

## Claims

1. A spar cap assembly (10) for a wind turbine rotor blade with
• a carbon fiber-reinforced spar cap,
• a lightning conductor (32), which extends along the spar cap, and
• an equipotential bonding element, which connects the spar cap and the lightning conductor (32) together electrically conductively, wherein
• the spar cap comprises a plurality of layers of pultruded semi-finished products (14) and
• the equipotential bonding element comprises a sheet (22, 24) of a carbon fiber material, which rests against an end face (16a) of an end on the blade root side of one of the pultruded semi-finished products (14) and against an end face (16b) of an end on the blade tip side of one of the pultruded semi-finished products (14).

2. The spar cap assembly (10) for a wind turbine rotor blade as claimed in claim 1, wherein the sheet (22, 24) extends over the entire length of the spar cap.

3. The spar cap assembly (10) for a wind turbine rotor blade as claimed in claim 1 or 2, wherein the sheet (22) is arranged between two of the layers of pultruded semi-finished products (14).

4. The spar cap assembly (10) for a wind turbine rotor blade as claimed in one of claims 1 to 3, wherein the sheet (22, 24) rests flat against the spar cap and/or against the lightning conductor (32).

5. The spar cap assembly (10) for a wind turbine rotor blade as claimed in one of claims 1 to 4, wherein one of the end faces (16a, 16b) is arranged obliquely relative to the longitudinal direction of the spar cap, wherein a normal vector to the end face (16a, 16b) is oriented substantially orthogonally relative to a transverse direction of the spar cap and the ratio of the thickness of the pultruded semi-finished product (14) on which the end face (16a, 16b) is formed and the extent of the end face (16a, 16b) in the longitudinal direction of the spar cap lies in the range from 1:5 to 1:50.

6. The spar cap assembly (10) for a wind turbine rotor blade as claimed in one of claims 1 to 5, wherein the equipotential bonding element comprises a further sheet (24) of a carbon fiber material, which rests against the sheet (22) and/or against the lightning conductor (32) and against at least one end face (16a, 16b) of a further pultruded semi-finished product (14) of the spar cap.

7. The spar cap assembly (10) for a wind turbine rotor blade as claimed in one of claims 1 to 6, wherein the spar cap has a number of layers (18, 20, 26, 28, 30, 34, 36) arranged on top of one another of pultruded semi-finished products (14), wherein each of the layers (18, 20, 26, 28, 30, 34, 36) has an end face (16a) on the blade root side and an end face (16b) on the blade tip side and the further sheet (24) rests at least against half of the blade root-side end faces (16a) and at least against half of the blade tip-side end faces (16b).

8. The spar cap assembly (10) for a wind turbine rotor blade as claimed in claim 7, wherein the further sheet (24) rests, between two adjacent end faces (16) against which it rests, flat against a pultruded semi-finished product (14).

9. The spar cap assembly (10) for a wind turbine rotor blade as claimed in claim 7 or 8, wherein the further sheet (24) is subdivided into two longitudinal portions (24a, 24b), of which one rests against at least half of the blade root-side end faces (16a) and the other against at least half of the blade tip-side end faces (16b).

10. The spar cap assembly (10) for a wind turbine rotor blade as claimed in one of claims 1 to 9, wherein the end faces (16) of a top layer (30) do not rest against the equipotential bonding element.

11. The spar cap assembly (10) for a wind turbine rotor blade as claimed in one of claims 1 to 10, wherein the sheet (22) and/or the further sheet (24) extend(s) over the entire width of the spar cap.

12. The spar cap assembly (10) for a wind turbine rotor blade as claimed in one of claims 1 to 11, wherein the sheet (22) and/or the further sheet (24) comprise(s) a bidirectional woven carbon fiber material.

13. The spar cap assembly (10) for a wind turbine rotor blade as claimed in one of claims 1 to 12, wherein the sheet (22) and/or the further sheet (24) comprise(s) unidirectionally arranged fibers, which are arranged in the longitudinal direction of the spar cap.

14. The spar cap assembly (10) for a wind turbine rotor blade as claimed in one of claims 1 to 13, wherein the further sheet (24) is a cover sheet which is arranged on a top of the spar cap.

15. The spar cap assembly (10) for a wind turbine rotor blade as claimed in one of claims 1 to 14, wherein the pultruded semi-finished products (14), the lightning conductor (32) and the equipotential bonding element are embedded in a common plastics matrix and take the form of a prefabricated assembly for integration into a wind turbine rotor blade after curing of the plastics matrix.

16. A wind turbine rotor blade having a spar cap assembly (10) as claimed in one of claims 1 to 15.

## Revendications

1. Ensemble de courroie (10) pour une pale de rotor d'éolienne, comprenant :
• une courroie renforcée par des fibres de carbone,
• un paratonnerre (32) s'étendant le long de la courroie, et
• un élément de compensation de potentiel reliant la courroie et le paratonnerre (32) entre eux de façon électriquement conductrice, **caractérisé en ce que**
• la courroie présente plusieurs strates de produits semifinis pultrudés (14), et
• l'élément de compensation de potentiel présente une couche (22, 24) constituée d'un matériau à base de fibres de carbone, laquelle s'applique sur une surface frontale (16a) d'une extrémité côté base de pale de l'un des produits semifinis pultrudés (14) et sur une surface frontale (16b) d'une extrémité côté point de pale de l'un des produits semifinis pultrudés (14).

2. Ensemble de courroie (10) pour une pale de rotor d'éolienne selon la revendication 1, **caractérisé en ce que** la couche (22, 24) s'étend sur toute la longueur de la courroie.

3. Ensemble de courroie (10) pour une pale de rotor d'éolienne selon la revendication 1 ou 2, **caractérisé en ce que** la couche (22) est disposée entre deux des couches de produits semifinis pultrudés (14).

4. Ensemble de courroie (10) pour une pale de rotor d'éolienne selon l'une des revendications 1 à 3, **caractérisé en ce que** la couche (22, 24) s'applique de façon surfacique sur la courroie et/ou sur le paratonnerre (32).

5. Ensemble de courroie (10) pour une pale de rotor d'éolienne selon l'une des revendications 1 à 4, **caractérisé en ce que** l'une des surfaces frontales (16a, 16b) est disposée en oblique par rapport à la direction longitudinale de la courroie, dans lequel un vecteur normal est orienté vers la surface frontale (16a, 16b) de façon essentiellement orthogonale à une direction transversale de la courroie, et le rapport entre une épaisseur du produit semifini pultrudé (14), sur lequel est formée la surface frontale (16a, 16b), et l'étendue de la surface frontale (16a, 16b) dans la direction longitudinale de la courroie est compris entre 1:5 et 1:50.

6. Ensemble de courroie (10) pour une pale de rotor d'éolienne selon l'une des revendications 1 à 5, **caractérisé en ce que** l'élément de compensation de potentiel présente une autre couche (24) constituée d'un matériau à base de carbone, laquelle s'applique sur la couche (22) et/ou sur le paratonnerre (32) et sur au moins une surface frontale (16a, 16b) d'un autre produit semifini pultrudé (14) de la courroie.

7. Ensemble de courroie (10) pour une pale de rotor d'éolienne selon l'une des revendications 1 à 6, **caractérisé en ce que** la courroie présente un certain nombre de strates superposées (18, 20, 26, 28, 30, 34, 36) de produits semifinis pultrudés (14), dans lequel chacune des strates (18, 20, 26, 28, 30, 34, 36) présente une surface frontale côté base de pale (16a) et une surface frontale côté pointe de pale (16b) et l'autre couche (24) s'applique au moins sur la moitié des surfaces frontales côté base de pale (16a) et au moins sur la moitié des surfaces frontales côté pointe de pale (16b).

8. Ensemble de courroie (10) pour une pale de rotor d'éolienne selon la revendication 7, **caractérisé en ce que** l'autre couche (24) s'applique de façon surfacique sur un produit semifini pultrudé (14) entre deux surfaces frontales (16) voisines.

9. Ensemble de courroie (10) pour une pale de rotor d'éolienne selon la revendication 7 ou 8, **caractérisé en ce que** l'autre couche (24) est divisée en deux segments longitudinaux (24a, 24b), parmi lesquels un segment s'applique au moins sur la moitié des surfaces frontales côté base de pale (16a) et l'autre segment s'applique au moins sur la moitié des surfaces frontales côté pointe de pale (16b).

10. Ensemble de courroie (10) pour une pale de rotor d'éolienne selon l'une des revendications 1 à 9, **caractérisé en ce que** les surfaces frontales (16) d'une strate supérieure (30) ne s'appliquent pas sur l'élément de compensation de potentiel.

11. Ensemble de courroie (10) pour une pale de rotor d'éolienne selon l'une des revendications 1 à 10, **caractérisé en ce que** la couche (22) et/ou l'autre couche (24) s'étend/s'étendent sur toute la largeur de la courroie.

12. Ensemble de courroie (10) pour une pale de rotor d'éolienne selon l'une des revendications 1 à 11, **caractérisé en ce que** la couche (22) et/ou l'autre couche (24) présente/présentent un tissu bidirectionnel en fibres de carbone.

13. Ensemble de courroie (10) pour une pale de rotor d'éolienne selon l'une des revendications 1 à 12, **caractérisé en ce que** la couche (22) et/ou l'autre couche (24) présente/présentant des fibres disposées de façon unidirectionnelle, lesquelles sont disposées dans la direction longitudinale de la courroie.

14. Ensemble de courroie (10) pour une pale de rotor d'éolienne selon l'une des revendications 1 à 13, **caractérisé en ce que** l'autre couche (24) est une couche de revêtement disposée sur une surface supérieure de la courroie.

15. Ensemble de courroie (10) pour une pale de rotor d'éolienne selon l'une des revendications 1 à 14, **caractérisé en ce que** les produits semifinis pultrudés (14), le paratonnerre (32) et l'élément de compensation de potentiel sont incorporés dans une matrice en plastique commune et destinés à être intégrés dans une pale de rotor d'éolienne en tant qu'ensemble préfabriqué après le durcissement de la matrice en plastique.

16. Pale de rotor d'éolienne comprenant un ensemble de courroie (10) selon l'une des revendications 1 à 15.
